# EUROPÄISCHE PATENTSCHRIFT

(11) **EP 3 463 802 B1**
(45) Veröffentlichungstag und Bekanntmachung des Hinweises auf die Patenterteilung: **25.11.2020**
(21) Anmeldenummer: 17729373.5
(22) Anmeldetag: 15.05.2017
(51) Int. Cl.: B29C 49/48, B29C 49/72, B29C 49/08, B29C 49/42, B29C 65/16, B29C 49/06

(54) **STRECKGEBLASENER KUNSTSTOFFBEHÄLTER MIT EINEM INTEGRIERT AUSGEBILDETEN GRIFFBEREICH UND HERSTELLVERFAHREN FÜR DEN KUNSTSTOFFBEHÄLTER**
STRETCH-BLOW-MOULDED PLASTIC CONTAINER WITH AN INTEGRATED GRIP REGION, AND METHOD FOR PRODUCING THE PLASTIC CONTAINER
RÉCIPIENT SOUFFLÉ-ÉTIRÉ EN MATÉRIAU SYNTHÉTIQUE PRÉSENTANT UNE ZONE DE PRÉHENSION RÉALISÉE D'UN SEUL TENANT ET PROCÉDÉ DE FABRICATION DU RÉCIPIENT EN MATÉRIAU SYNTHÉTIQUE

(30) Priorität: 06.06.2016 CH 7212016
(43) Veröffentlichungstag der Anmeldung: 10.04.2019
(73) Patentinhaber: Alpla-Werke Alwin Lehner GmbH und Co. KG, 6971 Hard (AT)
(72) Erfinder: DEMIR, Adem, 6923 Lauterach (AT)
(74) Vertreter: Bohest AG Branch Ostschweiz
(86) Internationale Anmeldenummer: PCT/EP2017/061602
(87) Internationale Veröffentlichungsnummer: WO 2017/211540

(56) Entgegenhaltungen:
- EP-A1- 1 853 416
- EP-A2- 1 688 234
- US-A1- 2004 245 678
- Anonymous: "Klar-Klar-Schweißen ohne Additive - Plastverarbeiter.de", , 22. Juni 2015 (2015-06-22), XP055302695, Gefunden im Internet: URL:http://www.plastverarbeiter.de/52063/k lar-klar-schweissen-ohne-additive/ [gefunden am 2016-09-14]
- Rolf Klein: "Laserstrahlschweißen transparenter und farbiger Kunststoffe", , 1. September 2007 (2007-09-01), Seiten 41-44, XP055302696, Gefunden im Internet: URL:http://onlinelibrary.wiley.com/doi/10. 1002/latj.200790176/pdf [gefunden am 2016-09-14]

## Beschreibung

Die Erfindung betrifft einen streckgeblasenen Kunststoffbehälter, beispielsweise eine vorzugsweise transparente Kunststoffflasche, mit einem integriert ausgebildeten Griffbereich, gemäss dem Oberbegriff des Patentanspruchs 1. Die Erfindung betrifft auch ein Verfahren zur Herstellung eines derartigen Kunststoffbehälters.

Die in der Vergangenheit üblichen Behälter aus Weiss- oder Buntblech, aus Glas oder auch aus Keramik werden in zunehmendem Masse von Behältern aus Kunststoff abgelöst. Insbesondere für die Verpackung fluider Substanzen für Anwendungen im Haushalt, in Landwirtschaft, Industrie und Gewerbe etc., kommen hauptsächlich Kunststoffbehälter zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältern bei den Konsumenten zu fördern.

Für die Herstellung von Kunststoffbehältern, insbesondere Kunststoffflaschen, sind verschiedene Verfahren bekannt, deren Anwendung nicht zuletzt auch von den verwendeten Kunststoffen abhängt. Meist werden die Kunststoffbehälter in einem Blasformverfahren hergestellt, bei der Behälter, beispielsweise eine Kunststoffflasche, durch Überdruck in einer Blasform in seine endgültige Form aufgeblasen wird. Beim Blasformen unterscheidet man verschiedene Verfahrenstechniken, von denen insbesondere das Extrusionsblasverfahren, das Spritzblasen und das Spritzstreckblasverfahren zu nennen sind. Beim Extrusionsblasverfahren wird ein ein- oder mehrschichtiger Kunststoffschlauch heiss extrudiert, in eine Blasform eingebracht und über einen in die Formkavität eingefahrenen Blasdorn zu einem Kunststoffbehälter aufgeblasen. Beim Spritzblasverfahren handelt es sich um eine Kombination von Spritzgiessen und Blasformen. Dabei wird zunächst in einem Spritzgiessverfahren in einer Spritzform ein Preform hergestellt. Der Preform wird aus der Spritzform entformt, gegebenenfalls konditioniert und in die Formkavität einer Blasform eingebracht, in welcher er schliesslich mit Überdruck gemäss der durch die Formkavität vorgegebene Form aufgeblasen wird. Beim Spritzstreckblasverfahren wird der in die Formkavität eingebrachte Preform beim Blasprozess zusätzlich mit einem Reckdorn getreckt. Das Aufblasen des Preforms kann unmittelbar anschliessend an seine Herstellung im Spritzgiessverfahren erfolgen. In alternativen Herstellverfahren kann die Weiterverarbeitung der Preforms auch räumlich und/oder zeitlich getrennt von der Preformherstellung erfolgen. Schliesslich sei auch noch erwähnt, dass die Preforms auch in einem Fliesspressverfahren oder auch in einem Extrusionsblasverfahren hergestellt sein können.

Die ersten Kunststoffbehälter mit einem integrierten Griffbereich wurden in einem Extrusionsblasverfahren aus Polyethylen (PE) hergestellt. Polyethylen war insgesamt gut verarbeitbar und erlaubte es, einen integrierten Griffbereich durch Verformen und Verschweissen herzustellen. Nachteilig ist jedoch, dass Kunststoffbehälter aus PE nicht transparent sind. Daher wurde PE sehr bald durch Polyvinylchlorid (PVC) als Ausgangsmaterial ersetzt, welches es ermöglichte, transparente Kunststoffbehälter mit integriertem Griffbereich herzustellen. PVC weist zwar eine gute Verschweissbarkeit auf, ist jedoch in den verschiedenen Blasformverfahren relativ schwer zu verarbeiten. Auch sprechen ökologische Gründe gegen einen übermässig grossen Einsatz von PVC als Rohmaterial für transparente Kunststoffbehälter. Viele alternative Kunststoffe, die zwar die gewünschte Transparenz aufweisen, scheiden aus Kostengründen, wegen ihrer relativ schweren Verarbeitbarkeit und wegen zu geringer mechanischer Festigkeiten, beispielsweise im Falltest, als Materialien für Kunststoffbehälter mit integrierten Griffbereichen aus.

Der am häufigsten für die Herstellung von transparenten Kunststoffbehältern im Streckblasverfahren eingesetzte Rohstoff ist Polyethylenterephthalat (PET). PET weist infolge der im Streckblasverfahren erzielbaren hohen Verstreckung sehr gute mechanische Festigkeitswerte auf. Beispielsweise wird im Streckblasverfahren von PET ein Gesamtverstreckungsfaktor von bis zu 20 erreicht. Dem steht beispielsweise bei Polyolefinen, wie Polyethylen (PE) oder Polypropylen (PP), die üblicherweise in einem Extrusionsblasverfahren verarbeitet werden, ein Gesamtverstreckungsfaktor von meist weniger als 5 gegenüber. Streckgeblasene Kunststoffbehälter, insbesondere solche aus PET, weisen wegen des höheren Gesamtverstreckungsfaktors gegenüber extrusionsgeblasenen Kunststoffbehältern deutlich grössere mechanische Festigkeitswerte auf. Dies und die kostengünstige Verfahrensführung insbesondere mit PET und vergleichbaren Kunststoffen, beispielsweise PEF, machen das Streckblasverfahren insbesondere auch für die Herstellung von Kunststoffbehältern mit integriertem Griffbereich sehr attraktiv.

Aus der JP 61 043535 A ist ein Streckblasverfahren bekannt, bei dem die Griffbereiche durch Verformung innerhalb der Blasform ausgebildet werden. Dabei werden am Behälterkörper einander gegenüberliegenden Wandungsbereiche von innerhalb der Blasform ausfahrbaren Stösseln zusammengepresst, nachdem der Behälterkörper in seine Endform streckgeblasen wurde. Die derart ausgebildeten Griffbereiche bilden zu beiden Seiten des Kunststoffbehälters Griffmulden. Allerdings hat sich gezeigt, dass ein zuverlässiges Hantieren derartiger Flaschen mit einem als Griffmulden ausgebildeten Griffbereich nicht immer möglich ist. Daher konnten sich aus PET hergestellte Flaschen mit Griffmulden am Markt nicht durchsetzen.

EP1853416 und US2004245678 entsprechen grundsätzlich JP61043535A und dem Oberbegriff des Anspruchs 1.

Aufgabe der vorliegenden Erfindung ist es daher, diesen Nachteilen und Unzulänglichkeiten der Kunststoffbehälter des Stands der Technik abzuhelfen. Es soll ein Kunststoffbehälter, beispielsweise eine Kunststoffflasche, mit einem integriert ausgebildeten Griffbereich geschaffen werden, der anhand des integrierten Griffbereichs zuverlässig greif- und transportierbar ist. Dabei soll der Kunststoffbehälter in einem weitgehend standardisierten Streckblasverfahren herstellbar sein. Aufwendige Modifikationen der Verfahrensführung sollen vermieden werden können. Das Herstellverfahren soll kurze Zykluszeiten erlauben und kostengünstig durchführbar sein.

Die Lösung dieser und noch weiterer Aufgaben besteht in einem streckgeblasenen Kunststoffbehälter mit einem integriert ausgebildeten Griffbereich, welcher die im Patentanspruch 1 aufgelisteten Merkmale aufweist. Ein zugehöriges Herstellverfahren für den erfindungsgemässen Kunststoffbehälter weist die im unabhängigen Verfahrensanspruch angeführten Merkmale auf. Weiterbildungen und/oder vorteilhafte Ausführungsvarianten der Erfindung sind Gegenstand der jeweiligen abhängigen Vorrichtungs- bzw. Verfahrensansprüche.

Die Erfindung schlägt einen streckgeblasenen Kunststoffbehälter vor, der einen ein Füllvolumen umschliessenden Behälterkörper mit einem Behälterboden und einen an ein gegenüberliegendes Längsende des Behälterkörpers anschliessenden Behälterhals mit einer Behälteröffnung sowie einen integriert ausgebildeten Griffbereich aufweist. Der Griffbereich ist hohl ausgebildet und steht mit dem vom Behälterkörper umschlossenen Füllvolumen in Verbindung. Zwischen dem Griffbereich und dem Behälterkörper ist eine Durchgreiföffnung ausgespart, die über ihren gesamten Umfang von miteinander verschweissten Wandungsteilen des Behälterkörpers und des Griffbereichs berandet ist.

Der Griffbereich des Kunststoffbehälters ist hohl ausgebildet und steht in Verbindung mit dem Füllvolumen. Dadurch kann eine abgefüllte Substanz sich auch in den Griffbereich ausdehnen. Der hohle Griffbereich trägt somit zum Füllvolumen bei. Dabei verleiht ihm seine Dimensionierung mit einem durch eine Innenwandung des Griffbereichs begrenzten Flächeninhalt begrenzten Flächeninhalt an seiner engsten Stelle von ca. 5mm² bis etwa 400mm² eine ausreichende Festigkeit. Der Griffbereich kann hierbei jede beliebige geometrische Figur aufweisen. Als angenehm für einen Benutzer zum Greifen haben sich geometrische Ausformungen erwiesen, die zumindest im Bereich des Durchgriffs gerundet, beispielsweise rund oval oder elliptisch ausgebildet sind. Die ausgesparte Durchgreiföffnung erleichtert das Ergreifen und Halten des Kunststoffbehälters. Dadurch können auch Kunststoffbehälter mit einem Fassungsvermögen von etwa 0,5 bis etwa 20 Litern und mehr gut ergriffen und sicher gehalten und manipuliert werden. Der Kunststoffbehälter ist in einem weitgehend konventionellen Streckblasverfahren aus einem röhrchenartigen Preform hergestellt, der zuvor üblicherweise in einem Spritzgiessverfahren gefertigt wurde. Die Herstellung von Kunststoffbehältern in einem Streckblasverfahren aus den konditionierten Preforms führt zu einer hohen Verstreckung des eingesetzten Kunststoffmaterials und kann sehr gute mechanische Festigkeitswerte, beispielsweise hinsichtlich Stauchfestigkeit und Fallbeständigkeit, gewähren. Das Herstellverfahren in einem Streckblasverfahren aus einem Preform ist am fertig geblasenen Kunststoffbehälter nachvollziehbar. Beispielsweise ist der Anspritzpunkt des Preforms am Behälterboden erkennbar. Auch weist der mit der Behälteröffnung versehene Behälterhals üblicherweise eine grössere Wandstärke auf und kann unverstreckt sein, da er sich beim Streckblasverfahren ausserhalb der Blasformkavität befindet.

In einer Ausführungsvariante des Kunststoffbehälters können die die Durchgreiföffnung berandenden miteinander verschweissten Wandungsteile eine Schweissnaht bilden, deren Breite 100 µm bis 5 mm aufweist.

Bei einem derartigen konventionellen Laserschweissverfahren sind dabei üblicherweise Schweissnähte einer Breite von 3 mm bis 5 mm erzielbar.

In einer alternativen Ausführungsvariante des Kunststoffbehälters kann als Laserschweissverfahren für das Verschweissen der die Durchgreiföffnung berandenden Wandungsteile ein Klar-Klar-Schweissverfahren eingesetzt werden. Hierbei weisen die Wandungsteile ein Gesamtverstreckungsfaktor größer als 3 auf. Am fertigen Kunststoffbehälter ist dies anhand der sehr schmalen Schweissnahtbreite von 100 µm bis 3 mm nachvollziehbar. Dabei kann die Schweissnaht eine sehr geringe Schwankungsbreite von bis zu nur 10 µm aufweisen. Klar-Klar Laserschweissen erlaubt eine sehr präzise Verschweissung von gegenüber der eingesetzten Laserstrahlung transparenten Kunststoffmaterialien ohne die Zugabe von Zusatzstoffen. Damit können die Wandungsbereiche, die die Durchgreiföffnung umranden, miteinander verschweisst werden. Während beim konventionellen Laserschweissen der obere Fügepartner durchstrahlt und die Wärme erst im darunter liegenden unteren Fügepartner erzeugt wird, wird beim Klar-Klar Schweissen die Wärme in den gesamten durchstrahlten Körper eingebracht. Durch die präzise Fokussierung des eingestrahlten Laserlicht auf die Schweissebene werden die Materialien beider Fügepartner aufgeschmolzen. Der Wärmeeintrag kann dabei durch die Anregung von Wassermolekülen im Kunststoff zum Schwingen erfolgen. Auf Zusatzstoffe zur Umwandlung der eingestrahlten Energie in Wärme kann daher verzichtet werden. Dadurch kann der Laserschweissvorgang vereinfacht und beschleunigt werden.

In einer Ausführungsvariante des erfindungsgemässen Kunststoffbehälters kann der Behälterkörper ein Füllvolumen von 0,5 bis 20 Litern, vorzugsweise 0,7 bis 10 Litern und besonders bevorzugt 0,9 bis 3 Litern aufweisen. Kunststoffbehälter mit derartigen Volumina sind im Lebensmittelbereich, beispielsweise für Speiseöle, ebenso begehrt wie für die Aufbewahrung von Haushaltsreinigungs- und Pflegemitteln, Waschmitteln oder auch Mineralölen und dergleichen.

Eine weitere Ausführungsvariante des Kunststoffbehälters kann vorsehen, dass der Behälterkörper ein- oder mehrlagig ausgebildet ist und einen Massenanteil von wenigstens 80 % aufweist, der aus einer Kunststoff-Hauptkomponente aus der Gruppe bestehend aus Polyethylenterephthalat, Polyethylennaphthalat, Polyactide, Polyethylenfuranoat, Polypropylenfuranoat, deren Copolymere und Gemischen der genannten Kunststoffe besteht. In der Literatur wird Polypropylenfuranoat vermehrt auch als Polytrimethylenfuranoat bezeichnet. Die Glasübergangstemperatur der angeführten Kunststoffe ist hierbei kleiner als 150°C und größer als 54°C. Die angeführten Kunststoffe weisen grosse Ähnlichkeiten hinsichtlich ihrer Verarbeitbarkeit auf. Sie erlauben hohe Verstreckungsgrade und können zu transparenten Kunststoffbehältern mit hohen Festigkeitswerden verarbeitet werden. In der Regel werden die Kunststoffe derart verstreckt, dass sie sich bei einer Erwärmung auf eine Temperatur größer als 150°C um mehr als 20% zusammenziehen. Messbar ist dies, indem ein 10 mm breiter Zugstab aus der zu verschweissenden Kontur präpariert wird und dieser Zugstab 20 Sekunden lang auf über 150°C erwärmt wird. Ferner sind die angeführten Kunststoffe auch zuverlässig mit den angeführten Laserschweissverfahren verbindbar, um einen integrierten Griffbereich mit Durchgreiföffnung herstellen zu können.

In einer weiteren Ausführungsform kann der Behälterkörper des Kunststoffbehälters wenigstens bereichsweise transparent ausgebildet sein. Die transparente Ausbildung des Behälterkörpers ermöglicht eine unmittelbare Kontrolle des Füllstands.

Gemäß einem weiteren Ausgestaltungsbeispiel der Erfindung ist ein die Durchgreiföffnung begrenzender Rand als gratfreier gerundeter Wulst ausgebildet. Nach dem Verschweissen der Wandung werden die durch die Schweißnaht begrenzten, im Wesentlichen aneinander liegenden Wandungsabschnitte zur Bildung der Durchgriffsöffnung entfernt. Dies kann mittels eines CO₂-Lasers erfolgen, der in einem Arbeitsschritt den nicht benötigten Wandungsabschnitt thermisch heraustrennen und an der Schnittkante einen gratfreien gerundeten Wulst erzeugen kann. Dieser wird von dem Benutzer, dessen Hand durch die Durchgreiföffnung hindurch greift, als angenehm empfunden. Die Wandungsteile können auch in einer derartigen Form herausgetrennt werden, dass in der entstehenden Durchgreiföffnung wenigstens ein Vorsprung an dessen Rand ausgebildet wird, der eingerichtet ist, ein Einlegeteil in der Durchgriffsöffnung aufzunehmen. Das Einlegeteil kann beispielsweise als Dosierbecher ausgebildet sein, mit dem der Inhalt des Behälters dosiert entnehmbar ist.

Bei einem Verfahren zur Herstellung eines Kunststoffbehälters gemäss einer Ausführungsvariante der Erfindung wird ein röhrchenartig ausgebildeter Preform in einem Streckblasverfahren in einer Blasform axial und radial zu einem Kunststoffbehälter verstreckt. Während des Verstreckens werden zwei einander gegenüberliegende Wandungsbereiche des Behälterkörpers mittels aus der Blasform ausfahrbarer Stössel zur Vorbereitung eines integrierten Griffbereichs einander angenähert. Danach wird der streckgeblasene Kunststoffbehälter entformt und zu einer Schweissstation transportiert, in der die einander angenäherten Wandungsbereiche unter Ausbildung einer Schweissnaht miteinander verschweisst werden. Der von der Schweissnaht umschlossene Wandungsabschnitt wird sodann unter Bildung einer Durchgreiföffnung vom Behälterkörper abgetrennt und entfernt.

Bei dem erfindungsgemässen Verfahren können einander gegenüberliegende Wandungsbereiche des Behälterkörpers während des Verstreckens des eingesetzten Preforms einander angenähert werden. Dabei kann eine in der Anfangsphase des Streckblasverfahrens erzeugte Vorblase deformiert werden. Dadurch kann sichergestellt werden, dass das Kunststoffmaterial im gewünschten Umfang gereckt wird. Danach kann die Vorblase gemäss der um die ausgefahrenen Stössel verkleinerten Blasformkavität fertig aufgeblasen werden. Dadurch kann es zu einer sehr gleichmässigen Materialverteilung kommen, so dass der fertig aufgeblasene Kunststoffbehälter auch in den Bereichen, in denen die einander gegenüberliegenden Wandungsbereiche einander angenähert sind, eine relativ gleichmässige Wandstärkenverteilung aufweist. Bei Bedarf können die Stempel auch noch während des Hauptblasvorgangs aufeinander zugefahren werden, um die Aussenkontur des Behälterkörpers noch weiter zu verändern. Die einander angenäherten, einander gegenüberliegenden Wandungsbereiche bilden am fertig geblasenen Kunststoffbehälter Griffmulden, die eine Vorstufe für einen integrierten Griffbereich bilden. Nach dem Entformen des Kunststoffbehälters wird dieser in eine Schweissstation transportiert. Dort werden die in der Blasform einander angenäherten Wandungsbereiche in eine flächige Anlage zueinander gebracht und entlang einer die Griffmulden berandenden geschlossenen Linie miteinander verschweisst. Der von der derart gebildeten Schweissnaht umschlossene Wandungsabschnitt kann sodann unter Bildung einer Durchgreiföffnung abgetrennt und entfernt werden. In einer Ausführungsvariante können die einander angenäherten Wandungsbereiche umlaufend aneinander verschweißt werden, ohne die Entfernung des durch die Schweißnaht berandeten Wandungsabschnitts. Hierdurch kann innerhalb des Behälterkörpers eine Zone geschaffen werden, die von dem Behälterinhalt nicht gefüllt ist. Dies kann einen visuellen Effekt erzeugen, insbesondere, wenn der Behälterinhalt farbig ist.

Während es zwar nicht zwingend erforderlich ist, kann in einer Verfahrensvariante vorgesehen sein, dass die einander angenäherten Wandungsbereiche bereits in der Blasform in flächige Anlage zueinander gebracht werden. Dadurch kann in den die Griffmulden bildenden Bereichen des Behälterkörpers eine maximale Verstreckung erzielt werden. Die aneinander anliegenden Wandbereiche können auch bereits eine gewisse Haftung aneinander besitzen, was den anschliessenden Verschweissprozess erleichtern kann.

Das Laserschweissen kann zeitlich und/oder örtlich getrennt vom Streckblasverfahren erfolgen. Das soll heissen, dass die einander angenäherten Wandungsbereiche nicht unmittelbar nach der Entformung in einer Schweissstation miteinander verschweisst werden müssen. Es kann auch vorgesehen sein, dass die hergestellten Kunststoffbehälter zunächst zwischengelagert werden, bevor sie an eine Schweissstation weitertransportiert werden.

In einer weiteren Verfahrensvariante können die einander angenäherten Wandungsbereiche in einem Klar-Klar Schweissverfahren stoffschlüssig miteinander verbunden werden. Klar-Klar Laserschweissen erlaubt eine sehr präzise Verschweissung von gegenüber der eingesetzten Laserstrahlung transparenten Kunststoffmaterialien ohne die Zugabe von Zusatzstoffen. Während beim konventionellen Laserschweissen der obere Fügepartner durchstrahlt und die Wärme erst im darunter liegenden unteren Fügepartner erzeugt wird, wird beim Klar-Klar Schweissen die Wärme in den gesamten durchstrahlten Körper eingebracht. Durch die präzise Fokussierung des eingestrahlten Laserlicht auf die Schweissebene werden die Materialien beider Fügepartner aufgeschmolzen. Der Wärmeeintrag kann dabei durch die Anregung von Wassermolekülen im Kunststoff zum Schwingen erfolgen. Auf Zusatzstoffe zur Umwandlung der eingestrahlten Energie in Wärme kann daher verzichtet werden, so dass ein Zumischen von gegenüber dem eingesetzten Laserlicht absorbierenden Zusatzstoffen in den Kunststoff unterbleiben kann. Dadurch kann der Laserschweissvorgang vereinfacht und beschleunigt werden. Eine Verfahrensvariante des Laserschweissens kann vorsehen, dass die einander angenäherten Wandungsbereiche mittels zweier einander gegenüberliegender Stempel zusammengepresst werden, wobei wenigstens einer der beiden Stempel gegenüber der zum Laserschweissen eingesetzten Laserstrahlung transparent ist. Selbst wenn sich die beiden einander angenäherten Wandungsbereiche bereits nach dem Streckblasverfahren in Anlage befinden bzw. bereits mehr oder weniger gut aneinander haften, sorgt das Zusammenpressen der Wandungsteile für eine definierte Lage der Wandungsteile auf einander. Die beiden Stempel fixieren also die beiden Wandungsbereiche und können zudem ein Zusammenziehen und Verformen der zu verschweissenden Bereiche insbesondere während des Schweißvorgangs verhindern. Zusätzlich können die Stempel den zu verschweißenden Bereich derart kühlen, dass während des Schweißvorgangs, respektive nach dem Schweißvorgang, die Schweissnaht stabil ist, sich also nicht zusammenzieht oder bricht. Dadurch kann die Schweissnaht exakt und von Behälter zu Behälter reproduzierbar erstellt werden. Hier sind Schweißnähte erzielbar, die innerhalb einer Toleranz von 10 µm gegenüber der vorbestimmten Schweißlinie liegen.

In einer weiteren Verfahrensvariante umfassen die zum Zusammenpressen der miteinander zu verschweissenden Wandungsbereiche verwendeten Stempel wenigstens einen Stempel, der aus einem gegenüber der eingesetzten Laserstrahlung transparenten Material, wie z.B. Glas, Quarzglas oder Acrylglas bestehen kann. Die Laserenergie wird dann durch diesen Stempel zu den Fügepartnern eingestrahlt. Bei Verwendung des Klar-Klar-Schweissverfahrens können auch beide Stempel aus einem für das verwendete Laserlicht durchlässigen Material bestehen.

In einer anderen Verfahrensvariante, die alternativ oder zusätzlich zum Zusammenpressen der miteinander zu verschweissenden Wandungsbereiche eingesetzt werden kann, können die einander angenäherten Wandungsbereiche durch einen im Behälterkörper erzeugten Unterdruck in flächiger Anlage zueinander gehalten werden. Der Unterdruck kann über die Behälteröffnung erzeugt werden, indem ein Saugkopf auf diese aufgesetzt wird.

Das Verschweissen der einander angenäherten Wandungsbereiche kann beim konventionellen Laserschweissverfahren wie auch beim Klar-Klar Schweissen von einander gegenüber liegenden Seiten erfolgen. Bei der Verwendung von Stempeln zum Zusammenpressen der Wandungsbereiche in der Schweissstation sind beide Stempel gegenüber der eingebrachten Laserstrahlung transparent und können aus Glas, Quarzglas oder Acrylglas bestehen.

Eine weitere Verfahrensvariante kann vorsehen, dass die die Durchgreiföffnung über ihren gesamten Umfang berandende Schweissnaht entgratet und/oder verrundet werden.

Das Entgraten oder Verrunden kann erforderlich sein, um den Haltekomfort für einen Benutzer des Kunststoffbehälters zu erhöhen.

Das Entgraten und/oder Verrunden kann zeitgleich mit oder im Anschluss an das Entfernen des von der Schweissnaht umschlossenen Wandungsabschnitts erfolgen. Beispielsweise kann hierzu ein CO₂-Laser verwendet werden, der den Wandabschnitt heraustrennt und parallel hierzu an dem die Durchgreiföffnung begrenzenden Rand einen gratfreien gerundeten Schweißwulst ausbildet.

Weitere Vorteile und Merkmale ergeben sich aus der nachfolgenden Beschreibung eines Ausführungsbeispiels der Erfindung unter Bezugnahme auf die nicht massstabsgetreuen schematischen Zeichnungen.
- Fig. 1: zeigt eine Blasformkavität mit einem eingesetzten Preform;
- Fig. 2: zeigt einen Querschnitt der Blasformkavität gemäss Schnittlinie II - II in Fig. 1;
- Fig. 3: zeigt einen Querschnitt der Blasformkavität mit einer aus dem Preform streckgeblasenen Vorblase;
- Fig. 4: zeigt einen Querschnitt der Blasformkavität und der Vorblase mit deformierten Seitenwandungen;
- Fig. 5: zeigt einen Querschnitt der Blasformkavität und eines vollständig aufgeblasenen Kunststoffbehälters;
- Fig. 6: zeigt einen Querschnitt des Kunststoffbehälters in einer Schweissstation;
- Fig. 7: zeigt einen Querschnitt des Kunststoffbehälters während des Laserschweissens;
- Fig. 8: zeigt einen Querschnitt des Kunststoffbehälters mit ausgeschnittenem Wandung steil;
- Fig. 9: zeigt einen vergrößert dargestellten Querschnitt durch einen eine Durchgreiföffnung begrenzenden Rand; und
- Fig. 10: zeigt eine perspektivische Darstellung eines nach dem erfindungsgemässen Verfahren streckgeblasenen Kunststoffbehälters.

In den schematischen Figuren sind gleiche Bauteile bzw. Elemente jeweils mit den gleichen Bezugszeichen versehen.

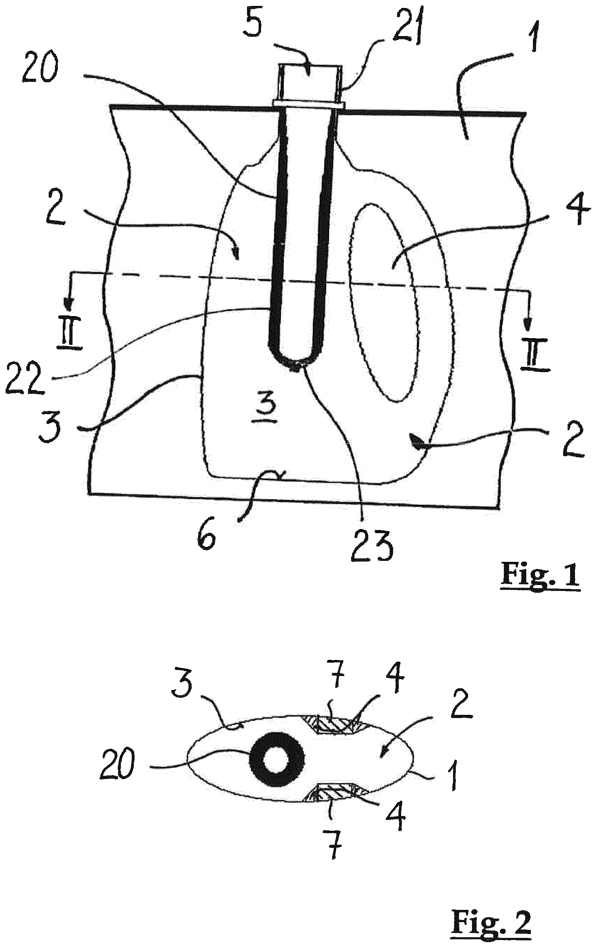

Fig. 1 zeigt einen Axialschnitt eines in eine Blasformkavität 2 einer Blasform 1 eingesetzten Preforms 20. Die Schnittebene verläuft entlang der Trennebene von zwei Blasformhälften der Blasform 1. Der einen Preformhals 21 mit einer Öffnung und einen mit einem Preformboden 23 verschlossenen Preformkörper 22 aufweisende röhrchenartige Preform 20 besteht aus einem thermoplastischen Kunststoff. Beispielsweise ist wenigstens der Preformkörper 22 ein- oder mehrlagig ausgebildet und besitzt einen Masseanteil von wenigstens 80 % aus einer Kunststoff-Hauptkomponente aus der Gruppe bestehend aus Polyethylenterephthalat, Polyactide, Polyethylennaphthalat, Polyethylenfuranoat, Polyepropylenfuranoat, deren Copolymere und Gemischen der genannten Kunststoffe. Der Preform 20 ist üblicherweise in einem Spritzgiessverfahren hergestellt. Er kann aber auch in einem Fliesspressverfahren oder in einem Extrusionsblasverfahren gefertigt sein. Die Blasform 1 ist Bestandteil einer Streckblasvorrichtung, in welcher der Preform 20 gemäss der Formkavität 2 zu einem Kunststoffbehälter aufgeblasen wird. Der Preformhals 21 befindet sich ausserhalb der Formkavität 2 und wird beim Streckblasverfahren üblicherweise nicht mehr verändert.

Der Preform 20 stützt sich an einer Mündung 5 der Blasformkavität 2 ab und erstreckt sich axial in Richtung eines Bodens 6 der Blasformkavität 2. Die Blasformkavität 2 ist von einer Blasformwandung 3 und dem Blasformboden 6 begrenzt. In einem randnahen Abschnitt der Blasformwandung 3 ragt ein Wandungsabschnitt 4 in das Innere der Blasformkavität 2. Die Innenkontur der Blasformkavität 2 gibt im wesentlichen die spätere Gestalt des im Streckblasverfahren herzustellenden Kunststoffbehälters vor. Der Preformkörper 22 wird dabei durch Aufblasen und axiales Recken mit einem durch die Öffnung im Preformhals 21 eingefahrenen Streckblasdorn zu dem Behälterkörper des Kunststoffbehälters umgeformt. Der Preformhals 21 bleibt beim Streckblasverfahren praktisch unverändert und bildet den Behälterhals des Kunststoffbehälters.

Die Querschnittdarstellung in Fig. 2 zeigt den beispielsweise rotationssymmetrisch ausgebildeten Preform 20 innerhalb der Blasformkavität 2 der Blasform 1 vor dem Beginn des Blas- und Streckvorgangs. Die Blasformkavität 2 weist beispielsweise zwei einander gegenüberliegende Wandungsabschnitte 4 auf, die gegenüber der Blasformwandung 3 vorstehen. Die beiden Wandungsabschnitte 4 weisen jeweils einen zentralen Bereich auf, der als ein verschiebbarer Stössel 7 ausgebildet ist. Durch Einfahren der Stössel 7 in die Blasformkavität 2 ist deren Innenkontur veränderbar. Die überstehenden Wandungsabschnitte 4 sind aus dem axialen Mittenbereich der Blasformkavität 2 gerückt und lassen einen zentralen, im wesentlichen zylindrischen Abschnitt für den Streckblasdorn frei.

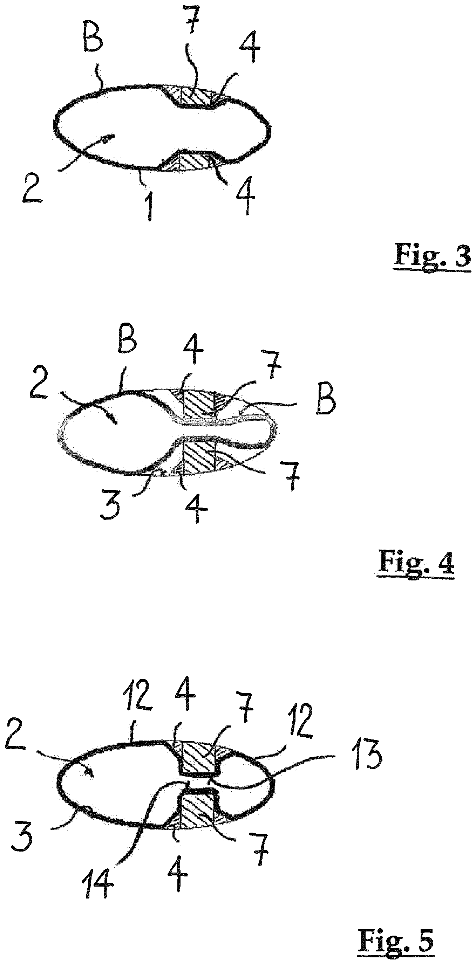

Fig. 3 zeigt eine aus dem Preform 20, insbesondere dem Preformkörper 21 in einem sogenannten Vorblasprozess erzeugte Vorblase B. Die Vorblase B folgt weitgehend der Innenkontur der Blasformkavität 2 mit sich in Ausgangsposition befindlichen Stösseln 7.

Fig. 4 zeigt die Blasformkavität 2 der Blasform 1 am Ende des Vorblasprozesses. Die Stössel 7 in den zentralen Bereichen der einander gegenüberliegenden Wandbereiche 4 sind im gewünschten Ausmass in das Innere der Blasformkavität 2 eingefahren. Dabei werden die Vorblase B deformiert und das Kunststoffmaterial gereckt. Die Deformierungen der Seitenwandungen der Vorblase B sind an denjenigen Bereichen angeordnet, an dem ein integrierter Griffbereich ausgebildet werden soll.

Fig. 5 zeigt einen Querschnitt der Blasformkavität 2 und eines fertig streckgeblasenen Kunststoffbehälters vor seiner Entformung. Insbesondere zeigt die Darstellung einen Querschnitt des Behälterkörpers 12 mit einander angenäherten Wandungsbereichen 13, 14. Die Wandungsbereiche 13, 14 entsprechen den Deformierungen in den Seitenwandungen der Vorblase (Fig. 4) und sind in einem randnahen Bereich des Behälterkörpers 12 angeordnet und bilden Griffmulden. Die Griffmulden bildenden Wandungsbereiche 13, 14 folgen der Kontur der gegenüber der Blasformwandung 3 vorstehenden Abschnitte 4 und der in die Blasformkavität 2 eingefahrenen Stössel 7. Die Zustellbewegung der Stössel 7 kann beispielsweise derart begrenzt sein, dass die einander angenäherten Wandungsbereiche 13, 14 noch einen Abstand voneinander aufweisen. In einer alternativen Verfahrensführung können die in die Formkavität 2 der Blasform 1 eingefahrenen Stössel 7 auch so weit aufeinander zugestellt werden, dass die Wandungsbereiche 13, 14 zwischen den Stösseln 7 geklemmt werden und in flächige Anlage zueinander gelangen. Gegebenenfalls können dabei die Wandungsteile 13, 14 im noch heissen Zustand der Vorblase an den Berührungsstellen miteinander zumindest teilweise verkleben.

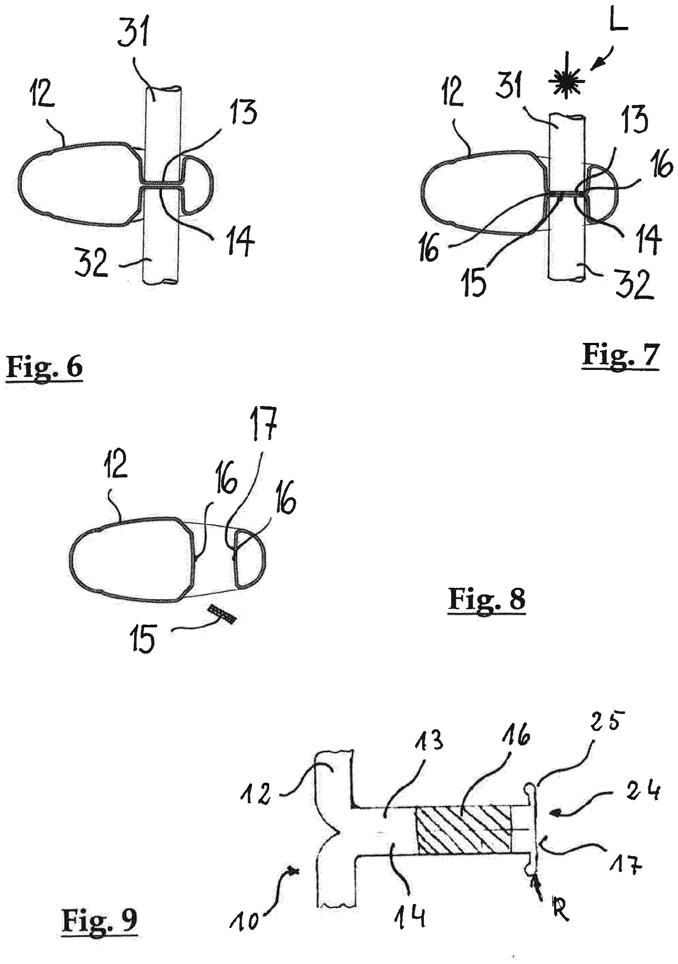

Fig. 6 zeigt einen schematischen Querschnitt des Behälterkörpers 12 eines aus der Blasform entformten streckgeblasenen Kunststoffbehälters. In einer Schweissstation werden die einander im Streckblasverfahren angenäherten Wandungsbereiche 13, 14 mit zwei einander gegenüberliegenden Stempeln 31, 32, die aufeinander zustellbar sind, zusammengepresst. Fig. 6 zeigt dabei einen Zustand kurz bevor die zusammengepressten Wandungsbereiche 13, 14 in flächige Anlage zueinander gelangen. Alternativ oder in Ergänzung dazu kann das flächige Aneinanderliegen der einander angenäherten Wandungsbereiche 13, 14 in der Schweissstation auch durch die Erzeugung eines Unterdrucks innerhalb des Behälterkörpers 12 bewerkstelligt sein. Beispielsweise kann dazu ein Saugkopf auf die Öffnung am Behälterhals aufgesetzt werden. Auch bei Kunststoffbehältern, deren Wandungsbereiche 13, 14 bereits während des Streckblasverfahrens in flächige Anlage zueinander gebracht werden, erfolgt in der Schweissstation ein Zusammenpressen der Wandungsbereiche mit den Stempeln 31, 32. Dadurch ist eine flächige Anlage gewährleistet und können die Wandungsbereiche in jedem Fall in eine definierte und reproduzierbare Lage in Bezug aufeinander gebracht werden.

Fig. 7 zeigt den Behälterkörper 12 mit über die Stempel 31, 32 zusammengepressten Wandungsbereichen 13, 14. Das Aneinanderpressen der Wandungsbereiche 13, 14 mit den Stempeln 31, 32 bewirkt, dass die sich zu verschweißenden Wandungsbereiche 13, 14 während des Schweissens stabil bleiben und sich nicht verziehen oder verformen. Darüber hinaus kühlen die Stempel 31, 32 und unterstützen den Vorgang, dass sich die zu verschweissenden Wandungsbereiche 13, 14 nicht verziehen. Die Wandungsbereiche 13, 14 sind derart verstreckt, dass sie sich bei einer Erwärmung für 20 Sekunden auf mehr als 150°C um mehr als 20% zusammenziehen. Die flächig aneinander liegenden Wandungsteile 13, 14 werden sodann entlang eines Randes ihrer Anlagefläche miteinander verschweisst. Dabei wird eine geschlossene Schweissnaht 16 erzeugt, die einen von den beiden Wandungsbereichen 13, 14 gebildeten Wandungsabschnitt 15 umschliesst. In einem weiteren Bearbeitungsschritt wird sodann der von der Schweissnaht 16 umschlossene Wandungsabschnitt 15 abgetrennt und entfernt, um eine Durchgreiföffnung 17 zu erzeugen.

Das Verschweissen der aneinander anliegenden Wandungsbereiche 13, 14 kann durch ein konventionelles Laser-Durchstrahlschweissen erfolgen. Die dabei erzeugte Schweissnaht 16 kann eine Breite aufweisen, die 3 mm bis 5 mm beträgt. In einer Verfahrensvariante können die zusammengepressten Wandungsbereiche 13, 14 durch ein Klar-Klar Schweissverfahren formschlüssig miteinander verbunden werden. Bei dieser Variante des Laserschweissens wird die eingebrachte Wärme präzise auf die Schweissebene fokussiert und können die miteinander zu fügenden Partner gezielt in der Schweissebene aufgeschmolzen werden. Der Wärmeeintrag kann dabei durch die Anregung von Wassermolekülen im Kunststoff zum Schwingen erfolgen. Auf Zusatzstoffe zur Umwandlung der eingestrahlten Energie in Wärme kann bei diesem SchweissVerfahren verzichtet werden.

Wenigstens einer der beiden Stempel 32, 32, mit denen die Wandungsbereiche 13, 14 zusammengepresst werden, ist gegenüber der zum Laserschweissen eingesetzten Laserstrahlung L transparent, damit die Laserstrahlung L durch diesen Stempel auf die Schweissebene fokussierbar ist. In einer alternativen Verfahrensführung kann das Laserschweissen auch von beiden Seiten der zusammengepressten Wandungsbereiche 13, 14 erfolgen. Es versteht sich, dass in diesem Fall beide Stempel 31, 32 aus einem gegenüber der eingebrachten Laserstrahlung transparenten Material bestehen. Beispielsweise bestehen der wenigstens eine oder beide Stempel 31, 32 aus Glas, Quarzglas oder Acrylglas.

In Fig. 8 ist das Abtrennen und Entfernen des von der Schweissnaht 16 umschlossenen Wandungsabschnitts 15 schematisch angedeutet. Durch das Abtrennen und Entfernen des Wandungsabschnitts 15 ist die Durchgreiföffnung 17 erzeugt. Die die Durchgreiföffnung 17 über ihren gesamten Umfang berandende Schweissnaht 16 kann auch noch entgratet und/oder verrundet werden. Das Entgraten und/oder Verrunden kann zeitgleich mit oder im Anschluss an das Entfernen des von der Schweissnaht 16 umschlossenen Wandungsabschnitts 15 erfolgen. Beispielsweise kann dazu ein dem Radius des Griffbereichs angepasster Infrarotstrahler eingesetzt werden.

Figur 9 zeigt einen vergrößert dargestellten Querschnitt durch den die Durchgreiföffnung 17 begrenzenden Rand. Der Wandungsabschnitt 15 wurde bei diesem Ausführungsbeispiel mittels eines CO₂-Lasers thermisch abgetrennt. Das Abtrennen des Wandabschnitts 15 erfolgt beabstandet zu der Schweissnaht 16, um eine thermische Belastung der Schweissnaht 16 durch das thermische Trennen so gering wie möglich zu halten. Parallel zu dem Abtrennen erfolgt eine Bildung einer gratfreien Wulst 24 am Rand. Bei der Bildung der Wulst 24 wird ein Teil des Materials über jede der Wandungsbereiche 13, 14 hinaus verdrängt und bildet einen Teilbereich 25. Jeder Teilbereich 25 bildet an seinem Rand einen Radius R mit etwa 0,25mm aus. Durch den gratfreien Wulst 24, der breiter ist als die Materialstärke der beiden Wandungsbereiche 13, 14, in Verbindung mit den Rundungen der Teilbereiche 25 wird einer durch die Durchgreiföffnung 17 hindurchgreifenden Hand eines Nutzers ein angenehmes Gefühl bei einer Handhabung vermittelt.

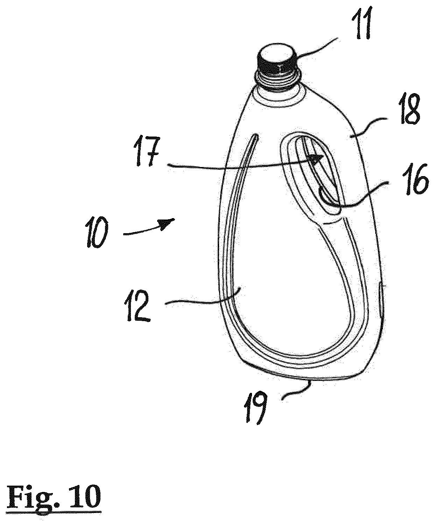

Fig. 10 zeigt schliesslich eine perspektivische Ansicht eines gemäss dem erfindungsgemässen Verfahren streckgeblasenen Kunststoffbehälters 10 mit einem integrierten Griffbereich 18. Der Kunststoffbehälter 10 weist einen Behälterhals 11 mit einer Behälteröffnung auf, der im wesentlichen dem Preformhals des Preforms entspricht, aus dem der Kunststoffbehälter 10 streckgeblasen wurde. An den Behälterhals 11 schliesst der von einem Behälterboden 19 verschlossene Behälterkörper 12 mit dem integrierten Griffbereich 18 an. Der Griffbereich 18 umschliesst die Durchgreiföffnung 17, die über ihren gesamten Umfang von der Schweissnaht 16 umschlossen ist und durch Entfernen des Wandungsabschnitts 15 (Fig. 7 und Fig. 8) erzeugt worden ist.

Der Griffbereich 18 des Kunststoffbehälters 10 ist hohl ausgebildet und steht in Verbindung mit dem übrigen vom Behälterkörper 12 umschlossenen Füllvolumen. Dadurch kann eine abgefüllte Substanz sich auch in den Griffbereich 18 ausdehnen. Der hohle Griffbereich 18 trägt somit zum Füllvolumen bei. Dabei verleiht ihm seine Dimensionierung mit einem durch eine Innenwandung des Griffbereichs begrenzten Flächeninhalt von ca. 5mm² bis etwa 400mm² eine ausreichende Festigkeit. Der Griffbereich schließt an seiner engsten Stelle einen Flächeninhalt von etwa 60mm² ein. Die ausgesparte Durchgreiföffnung 17 erleichtert das Ergreifen und Halten des Kunststoffbehälters 10. Dadurch können auch Kunststoffbehälter mit einem grösseren Fassungsvermögen von 2 bis 10 Litern und mehr gut ergriffen und sicher gehalten und gehandhabt werden. Der Kunststoffbehälter 10 ist vorzugsweise transparent ausgebildet, was eine unmittelbare Kontrolle des Füllstands ermöglicht. Der Kunststoffbehälter 10 ist in einem weitgehend konventionellen Streckblasverfahren aus einem röhrchenartigen Preform hergestellt, der zuvor üblicherweise in einem Spritzgiessverfahren gefertigt wurde. Die Herstellung in einem Spritzgiessverfahren führt zu einer hohen Verstreckung des eingesetzten Kunststoffmaterials und erlaubt die Herstellung von Kunststoffbehältern 10, die sehr gute mechanische Festigkeitswerte, beispielsweise hinsichtlich Stauchfestigkeit und Fallbeständigkeit, aufweisen.

## Patentansprüche

1. Streckgeblasener Kunststoffbehälter mit einem ein Füllvolumen umschliessenden Behälterkörper (12) mit einem Behälterboden (19) und einem am gegenüberliegenden Ende des Behälterkörpers (12) anschliessenden Behälterhals (11) mit einer Behälteröffnung sowie mit einem integriert ausgebildeten Griffbereich (18), der hohl ausgebildet ist und mit dem vom Behälterkörper (12) umschlossenen Füllvolumen in Verbindung steht, wobei zwischen dem Griffbereich (18) und dem Behälterkörper (12) eine Durchgreiföffnung (17) ausgespart ist, wobei der Behälterkörper (12) ein- oder mehrlagig ausgebildet ist und einen Massenanteil von wenigstens 80 % einer Kunststoff-Hauptkomponente aus der Gruppe bestehend aus Polyethylenterephthalat, Polyethylennaphthalat, Polyethylenfuranoat, deren Copolymeren und Gemischen der genannten Kunststoffe aufweist, und dass die Durchgreiföffnung (17) über ihren gesamten Umfang von miteinander verschweissten Wandungsteilen (13, 14) des Behälterkörpers und des Griffbereichs (18) berandet ist,
**dadurch gekennzeichnet, dass**
die miteinander verschweissten Wandungsteile (13, 14) in einem Laserschweissverfahren stoffschlüssig miteinander verbunden sind.

2. Kunststoffbehälter gemäss Anspruch 1, **dadurch gekennzeichnet, dass** die miteinander verschweissten Wandungsteile (13, 14) eine Schweissnaht (16) bilden, deren Breite 100 µm bis 5 mm aufweist.

3. Kunststoffbehälter gemäss. Ansprüche 1 oder 2, **dadurch gekennzeichnet, dass** das Laserschweissverfahren ein Klar-Klar-Schweissverfahren ist.

4. Kunststoffbehälter nach einem der vorangehenden Ansprüche, **dadurch gekennzeichnet, dass** der Behälterkörper (12) ein Füllvolumen von 0,5 bis 20 Litern, vorzugsweise 0,7 bis 10 Litern und besonders bevorzugt 0,9 bis 3 Litern aufweist.

5. Kunststoffbehälter gemäss einem der vorangehenden Ansprüche, **dadurch gekennzeichnet, dass** der Behälterkörper (12) wenigstens bereichsweise transparent ausgebildet ist.

6. Kunststoffbehälter gemäss einem der vorangehenden Ansprüche, **dadurch gekennzeichnet, dass** ein die Durchgreiföffnung begrenzender Rand als gratfreier gerundeter Wulst ausgebildet ist.

7. Verfahren zur Herstellung eines Kunststoffbehälters gemäss einem der Ansprüche 1 bis 6, wobei ein röhrchenartig ausgebildeter Preform (20), der ein- oder mehrlagig ausgebildet ist und einen Massenanteil von wenigstens 80 % einer Kunststoff-Hauptkomponente aus der Gruppe bestehend aus Polyethylenterephthalat, Polyethylennaphthalat, Polyethylenfuranoat, deren Copolymeren und Gemischen der genannten Kunststoffe aufweist,in einem Streckblasverfahren in einer Blasform (1) axial und radial zu einem Kunststoffbehälter (20) verstreckt wird, wobei während des Verstreckens zwei einander gegenüberliegende Wandungsbereiche (13, 14) des Behälterkörpers (12) mittels aus der Blasform (1) ausfahrbarer Stössel (7) zur Vorbereitung eines integrierten Griffbereichs (18) einander angenähert werden, danach der streckgeblasene Kunststoffbehälter (10) entformt und zu einer Schweissstation transportiert wird, in der die einander angenäherten Wandungsbereiche (13, 14) unter Ausbildung einer Schweissnaht (16) miteinander verschweisst werden, und ein von der Schweissnaht (16) umschlossener Wandungsabschnitt (15) unter Bildung einer Durchgreiföffnung (17) vom Behälterkörper (12) abgetrennt und entfernt wird, wobei die miteinander verschweissten Wandungsbereiche (13, 14) in einem Laserschweissverfahren stoffschlüssig miteinander verbunden werden.

8. Verfahren gemäss Anspruch 7, **dadurch gekennzeichnet, dass** die einander angenäherten Wandungsbereiche (13, 14) in der Blasform (1) in flächige Anlage zueinander gebracht werden.

9. Verfahren gemäss. Ansprüche 7 oder 8, **dadurch gekennzeichnet, dass** die einander angenäherten Wandungsbereiche (13, 14) in einem Klar-Klar Schweissverfahren stoffschlüssig miteinander verbunden werden.

10. Verfahren gemäss Anspruch 9, **dadurch gekennzeichnet, dass** die einander angenäherten Wandungsbereiche (13, 14) in der Schweissstation mittels zweier einander gegenüberliegender Stempel (31, 32) zusammengepresst werden, wobei wenigstens einer der beiden Stempel gegenüber der zum Laserschweissen eingesetzten Laserstrahlung (L) transparent ist.

11. Verfahren gemäss Anspruch 10, **dadurch gekennzeichnet, dass** wenigstens der gegenüber der eingesetzten Laserstrahlung (L) transparente Stempel aus Glas, Quarzglas oder Acrylglas besteht.

12. Verfahren gemäss einem der Ansprüche 9 bis 11, **dadurch gekennzeichnet, dass** die einander angenäherten Wandungsbereiche (13, 14) durch einen im Behälterkörper (12) erzeugten Unterdruck in flächiger Anlage zueinander gehalten werden.

13. Verfahren gemäss einem der Ansprüche 9 bis 12, **dadurch gekennzeichnet, dass** die einander angenäherten Wandung steile (13, 14) von einander gegenüber liegenden Seiten durch Laserschweissen stoffschlüssig miteinander verbunden werden.

14. Verfahren gemäss einem der Ansprüche 7 bis 13, **dadurch gekennzeichnet, dass** die die Durchgreiföffnung (17) über ihren gesamten Umfang berandende Schweissnaht (16) entgratet und/oder verrundet wird.

15. Verfahren gemäss Anspruch 14, **dadurch gekennzeichnet, dass** das Entgraten und/oder Verrunden der Schweissnaht (16) zeitgleich mit oder im Anschluss an das Entfernen des von der Schweissnaht (16) umschlossenen Wandungsabschnitts (15) erfolgt.

## Claims

1. A stretch-blown plastic container with a container body (12) which encloses a filling volume and is with a container bottom (19), and with a container neck (11) which connects at the opposite end of the container body (12) and is with a container opening, as well as with a handle region (18) which is designed in an integrated manner, is designed in a hollow manner and is in connection with the filling volume which is enclosed by the container body (12), wherein a grip-through opening (17) is recessed between the handle region (18) and the container body (12),
wherein the container body (12) is designed in a single-layered or multi-layered manner and comprises a mass share of at least 80% of a plastic primary component from the group consisting of polyethylene terephthalate, polyethylene naphthalate, polyethylene furanoate, their copolymers or mixtures of the mentioned plastics, and that the grip-through opening (17) over its entire periphery is edged by wall parts (13, 14) of the container body and of the handle region (18), said wall parts being welded to one another,
**characterised in that**
the wall parts (13, 14) which are welded to one another are materially connected to one another in a laser welding method.

2. A plastic container according to claim 1, **characterised in that** the wall parts (13, 14) which are welded to one another form a weld seam (16) whose width is 100 µm to 5 mm.

3. A plastic container according to claim 1 or 2, **characterised in that** the laser welding method is a clear-clear welding method.

4. A plastic container according to one of the preceding claims, **characterised in that** the container body (12) has a filling volume of 0.5 to 20 litres, preferably 0.7 to 10 litres and particularly preferably 0.9 to 3 litres.

5. A plastic container according to one of the preceding claims, **characterised in that** the container body (12) is designed transparently at least in regions.

6. A plastic container according to one of the preceding claims, **characterised in that** an edge which delimits the grip-through opening is designed as rounded bead free of burrs.

7. A method for manufacturing a plastic container according to one of the claims 1 to 6, wherein a preform (20) which is designed in tubelet-like manner and is designed in a single-layered or multi-layered manner and comprises a mass share of at least 80% of a plastic primary components from the group consisting of polyethylene terephthalate, polyethylene naphthalate, polyethylene furanoate, their copolymers or mixtures of the mentioned plastics is stretched axially and radially into a plastic container (20) in a blow mould (1) in a stretch blowing method, wherein during the stretching two opposite wall regions (13, 14) of the container body (12) are brought to one another by way of a plunger (7) which can be extended out of the blow mould (1), for preparing an integrated handle region (18), the stretch blown plastic container (10) is subsequently removed from the mould and is transported to a welding station, in which the wall regions (13, 14) which are brought to one another are welded to one another amid the formation of a weld seam (16), and a wall section (15) which is enclosed by the weld seam (16) is separated and removed from the container body (12) amid the formation of a grip-through opening (17), wherein the wall regions (13, 14) which are welded to one another are materially connected to one another in a laser welding method.

8. A method according to claim 7, **characterised in that** the wall regions (13, 14) which are brought to one another are brought into flat contact with one another in a blow mould (1).

9. A method according to claims 7 or 8, **characterised in that** the wall regions (13, 14) which are brought to one another are materially connected to one another in a clear-clear welding method.

10. A method according to claim 9, **characterised in that** the wall regions (13, 14) which are brought to one another are pressed together in the welding station by way of two opposite punches (31, 32), wherein at least one of the two punches is transparent with respect to the laser radiation (L) which is applied for laser welding.

11. A method according to claim 10, **characterised in that** at least the punch which is transparent to the applied laser welding (L) consist of glass, quartz glass or acrylic glass.

12. A method according to one of the claims 9 to 11, **characterised in that** the wall regions (13, 14) which are brought to one another (13, 14) are held in flat contact with one another by way of a negative pressure which is generated in the container body (12).

13. A method according to one of the claims 9 to 12, **characterised in that** the wall parts (13, 14) which are brought to one another are materially connected to one another from sides which lie opposite one another by way of laser welding.

14. A method according to one of the claims 7 to 13, **characterised in that** the welding seam (16) which edges the grip-through opening (17) over its entire periphery is deburred or rounded.

15. A method according to claim 14, **characterised in that** the deburring and/or the rounding of the weld seam (16) is effected simultaneously with or subsequently to the removal of the wall section (15) which is encompassed by the weld seam (16).

## Revendications

1. Récipient en matière plastique réalisé par étirage-soufflage, comprenant un corps de récipient (12) qui entoure un volume de remplissage et est doté d'un fond de récipient (19) et d'un col de récipient (11) situé à l'extrémité opposée du corps de récipient (12) et comportant un orifice de récipient, et comprenant une zone de préhension (18), réalisée d'un seul tenant, qui est creuse et communique avec le volume de remplissage entouré par le corps de récipient (12), une ouverture de passage des doigts (17) étant prévue entre la zone de préhension (18) et le corps de récipient (12), sachant que le corps de récipient (12) est réalisé en une ou plusieurs couches et présente un pourcentage de masse d'au moins 80 % d'un constituant principal de matière plastique issu du groupe comprenant le polyéthylène téréphtalate, le polyéthylène naphtalate, le polyéthylène furanoate, leurs copolymères et des mélanges des matières plastiques citées, et que l'ouverture de passage des doigts (17) est délimitée sur tout son pourtour par des parties de paroi (13, 14) du corps de récipient et de la zone de préhension (18),
**caractérisé en ce que** les parties de paroi (13, 14) soudées entre elles sont liées les unes aux autres par matière au cours d'un procédé de soudage laser.

2. Récipient en matière plastique selon la revendication 1, **caractérisé en ce que** les parties de paroi (13, 14) soudées entre elles forment une soudure (16) dont la largeur est comprise entre 100 µm et 5 mm.

3. Récipient en matière plastique selon les revendications 1 ou 2, **caractérisé en ce que** le procédé de soudage laser est un procédé de soudage par transparence.

4. Récipient en matière plastique selon l'une des revendications précédentes, **caractérisé en ce que** le corps de récipient (12) présente un volume de remplissage qui est compris entre 0,5 et 20 litres, de préférence entre 0,7 et 10 litres, et de manière particulièrement avantageuse entre 0,9 et 3 litres.

5. Récipient en matière plastique selon l'une des revendications précédentes, **caractérisé en ce que** le corps de récipient (12) est transparent au moins dans certaines parties.

6. Récipient en matière plastique selon l'une des revendications précédentes, **caractérisé en ce qu'**un bord délimitant l'ouverture de passage des doigts est réalisé sous la forme d'un bourrelet arrondi, dépourvu d'arêtes.

7. Procédé de fabrication d'un récipient en matière plastique selon l'une des revendications 1 à 6, selon lequel une préforme (20) en forme de petit tube, qui est réalisée en une ou plusieurs couches et présente un pourcentage de masse d'au moins 80 % d'un constituant principal de matière plastique issu du groupe comprenant le polyéthylène téréphtalate, le polyéthylène naphtalate, le polyéthylène furanoate, leurs copolymères et des mélanges des matières plastiques citées, est étirée au cours d'un procédé d'étirage-soufflage, dans un moule de soufflage (1), dans les sens axial et radial, pour obtenir un récipient en matière plastique (20), sachant que pendant l'étirage, deux parties de paroi (13, 14) du corps de récipient (12) situées mutuellement en vis-à-vis sont rapprochées l'une de l'autre à l'aide de coulisseaux (7) pouvant être avancés à partir du moule de soufflage (1), en vue de la préparation d'une zone de préhension (18) réalisée d'un seul tenant, qu'ensuite le récipient en matière plastique (10) étiré-soufflé est démoulé et transporté à un poste de soudage où les parties de paroi (13, 14) rapprochées l'une de l'autre sont soudées entre elles en formant une soudure (16), et qu'une partie de paroi (15) entourée par la soudure (16) est séparée du corps de récipient (12) et retirée, en formant une ouverture de passage des doigts (17), les parties de paroi (13, 14) soudées entre elles étant liées par matière par un procédé de soudage laser.

8. Procédé selon la revendication 7, **caractérisé en ce que** les parties de paroi (13, 14) rapprochées l'une de l'autre sont amenées en contact réciproque à plat dans le moule de soufflage (1).

9. Procédé selon les revendications 7 ou 8, **caractérisé en ce que** les parties de paroi (13, 14) rapprochées l'une de l'autre sont liées par matière par un procédé de soudage par transparence.

10. Procédé selon la revendication 9, **caractérisé en ce que** les parties de paroi (13, 14) rapprochées l'une de l'autre sont pressées l'une contre l'autre dans le poste de soudage, au moyen de deux poussoirs (31, 32) situés en vis-à-vis l'un de l'autre, sachant qu'au moins un des deux poussoirs est transparent au rayonnement laser (L) utilisé pour le soudage laser.

11. Procédé selon la revendication 10, **caractérisé en ce qu'**au moins le poussoir qui est transparent au rayonnement laser (L) utilisé est constitué de verre, de verre de quartz ou de verre acrylique.

12. Procédé selon l'une des revendications 9 à 11, **caractérisé en ce que** les parties de paroi (13, 14) rapprochées l'une de l'autre sont maintenues à plat l'une contre l'autre par une dépression produite dans le corps de récipient (12).

13. Procédé selon l'une des revendications 9 à 12, **caractérisé en ce que** les parties de paroi (13, 14) rapprochées l'une de l'autre sont liées par matière l'une à l'autre, par soudage au laser depuis des côtés opposés.

14. Procédé selon l'une des revendications 7 à 13, **caractérisé en ce que** la soudure (16) qui forme le bord de l'ouverture de passage des doigts (17), sur tout son pourtour, est ébavurée et/ou arrondie.

15. Procédé selon la revendication 14, **caractérisé en ce que** l'ébavurage et/ou l'arrondissage de la soudure (16) s'effectue en même temps ou à la suite du retrait de la partie de paroi (15) entourée par la soudure (16).
